# EUROPEAN PATENT APPLICATION

(11) **EP 4 447 367 A1**
(43) Date of publication of application: **16.10.2024**
(21) Application number: 24160859.5
(22) Date of filing: 01.03.2024
(51) Int. Cl.: H04L 5/00

(54) **METHOD AND APPARATUS FOR ADJUSTING FREQUENCY DOMAIN RESOURCE ALLOCATION**

(30) Priority: 14.04.2023 FI 20235429
(71) Applicant: Nokia Technologies Oy, 02610 Espoo (FI)
(72) Inventor: Li, Zexian, 02610 Espoo (FI); AMIRI, Abolfazl, 9220 Aalborg (DK); MOREJON GARCIA, Carlos Santiago, 9000 Aalborg (DK); Paris, Stefano, 92170 Vanves (FR); Saeed, Umar, 02230 Espoo (FI)
(74) Representative: Bryers Intellectual Property Ltd

(57) **Abstract**

Methods, apparatus and computer-readable medium are disclosed for adjusting frequency domain resource allocation. In an embodiment, there is provided a method comprising: transmitting an information element configuring a first channel status information, CSI, report of a user equipment, wherein the information element indicates a size and a starting point of resource blocks or resource block groups configured to a first subband; receiving, from the user equipment, the first CSI report for a set of the resource blocks or resource block groups of the first subband; determining based on the first CSI report, a second frequency domain resource to be used to configure a second transmission occasion, wherein the second frequency domain resource is different from a first frequency domain resource used to configure a first transmission occasion; and transmitting configuration information related to the first transmission occasion and the second transmission occasion.

## Description

### TECHNICAL FIELD

Embodiments of the disclosure generally relate to radio access technology, and more particularly, to methods and apparatus for adjusting frequency domain resource allocation, e.g., for configured grant (CG) uplink transmission or downlink transmission.

### BACKGROUND

In a radio access system, a cellular communication terminal (such as user equipment (UE)) communicates wirelessly with a radio access node called "base station" (such as gNB), to transmit data to and/or receive data from the radio access node. The wireless communication from the cellular communication terminal to the base station is called uplink communication. The wireless communication from the base station to the cellular communication terminal is called downlink communication.

Physical communication resources are required for performing uplink and downlink communication. For example, a UE can wirelessly transmit data to a base station via uplink transmission at a specific frequency and time slot. The frequency and time slot are used as examples of physical communication resources.

A mechanism of configured grant (CG) can be adopted for uplink transmission to reduce latency. In configured grant transmission, a base station configures the grant (e.g., CG physical uplink shared channel (PUSCH) configuration) in advance, and a cellular communication terminal can use uplink resources pre-configured with CG to transmit uplink transmission, without a need to specifically request these resources or a dynamic scheduling of these resources from the base station.

Some radio access systems support a CG configuration with multiple CG transmission occasions within a period of the CG configuration (called "CG period" hereinafter). A cellular communication terminal can use pre-configured resources at each of the multiple CG transmission occasions within a CG period.

Currently, frequency domain resource configured for each of the multiple CG transmission occasions within a CG period are kept the same. For example, in a current 5^{th} generation (5G) New Radio (NR) system, frequency resource allocation is kept the same after CG configuration is done for Type-1 CG configuration. For Type-2 CG configuration, the frequency domain resource is kept the same after CG configuration is activated with a downlink control information (DCI). It could become a limiting factor for some services, such as ultra reliable low latency communications (e.g., Extended Reality service), especially considering simultaneously fulfil the requirements of protocol data unit (PDU) set delay budget (PSDB) and reliability (e.g., 99.9%). There remains a need for a CG mechanism enabling variable frequency domain resource allocation over multiple CG transmission occasions within a CG period.

### SUMMARY

According to a first aspect of the disclosure, there is provided an apparatus at a base station. The apparatus comprises at least one processor, and at least one memory storing instructions that, when executed on the at least one processor, cause the apparatus at least to transmit an information element configuring a first channel status information (CSI) report of a user equipment, wherein the information element indicates a size and a starting point of resource blocks or resource block groups configured to a first subband; receive, from the user equipment, the first CSI report for a set of the resource blocks or the resource block groups of the first subband; determine based on the first CSI report, a second frequency domain resource to be used to configure a second transmission occasion, wherein the second frequency domain resource is different from a first frequency domain resource used to configure a first transmission occasion; and transmit configuration information related to the first transmission occasion and the second transmission occasion.

According to some embodiments, the apparatus may be further caused to receive from the user equipment, a second CSI report for resource blocks or resource block groups of a second subband surrounding the first subband. The second frequency domain resource may be determined based on the second CSI report.

According to some embodiments, the apparatus may be further caused to transmitting a request to the user equipment for the second CSI report. The request may comprise an indication of the second subband.

According to some embodiments, the configuration information may comprise a shift value indicating a shift a shift of a starting resource block or resource block group of the second frequency domain resource, with respect to a starting resource block or resource block group of the first frequency domain resource.

According to some embodiments, the configuration information may comprise a frequency domain resource allocation bitmap configured to allocate for the first transmission occasion, and the shift value may indicate shifting an index of the starting resource block or resource block group of the frequency domain resource allocation bitmap.

According to some embodiments, an amount of the second frequency domain resource may be kept unchanged with respect to the first frequency domain resource.

According to some embodiments, the apparatus may be further caused to determine the shift value based on at least one of the first CSI report and the second CSI report.

According to some embodiments, the configuration information comprises an indication indicating an amount of the second frequency domain resource different from an amount of the first frequency domain resource. The indication may indicate at least one of: whether an amount of the second frequency domain resource is to be increased or decreased, with respect to an amount of the first frequency domain resource allocated to the first transmission occasion; a number of resource blocks or resource block groups to be increased or decreased for the second frequency domain resource allocated to the second transmission occasion, with respect to the first frequency domain resource allocated to the first transmission occasion; or how resource blocks or resource block groups are to be occupied by the second frequency domain resources allocated to the second transmission occasion.

According to some embodiments, the apparatus may be further caused to determine based on at least one of the first CSI report and the second CSI report, the number of resource blocks or resource block groups to be increased or decreased for the second frequency domain resource allocated to the second transmission occasion with respect to the first frequency domain resource allocated to the first transmission occasion.

According to some embodiments, the first transmission occasion and the second transmission occasion may be transmission occasions for a semi-persistent scheduling (SPS) type of resource allocation or configured grant resource allocation.

According to a second aspect of the disclosure, there is provided an apparatus at a user equipment (UE). The apparatus comprises at least one processor, and at least one memory storing instructions that, when executed on the at least one processor, cause the apparatus at least to receive an information element configuring a first channel status information (CSI) report of a user equipment, wherein the information element indicates a size and a starting point of resource blocks or resource block groups configured to a first subband; transmit, to a base station, the first CSI report for a set of the resource blocks or the resource block groups of the first subband; obtain configuration information related to a first transmission occasion and a second transmission occasion; and identify according to the configuration information, a second frequency domain resource used to configure the second transmission occasion, wherein the second frequency domain resource is different from a first frequency domain resource used to configure the first transmission occasion and wherein the second frequency domain resource is configured based on the first channel status report.

According to some embodiments, the apparatus may be further caused to transmit, to the base station, a second CSI report for resource blocks or resource block groups of a second subband surrounding the first subband.

According to some embodiments, the apparatus may be further caused to receive a request from the base station for the second CSI report. The request may comprise an indication of the second subband.

According to a third aspect of the disclosure, there is provided a method performed by a base station. The method comprises: transmitting an information element configuring a first channel status information (CSI) report of a user equipment, wherein the information element indicates a size and a starting point of resource blocks or resource block groups configured to a first subband; receiving, from the user equipment, the first channel status report for a set of the resource blocks or the resource block groups of the first subband; determining based on the first CSI report, a second frequency domain resource to be used to configure a second transmission occasion within a transmission period, wherein the second frequency domain resource is different from a first frequency domain resource used to configure a first transmission occasion; and transmitting configuration information related to the first transmission occasion and the second transmission occasion.

According to fourth aspect of the disclosure, there is provided a method performed by a user equipment (UE). The method comprises: receiving an information element configuring a first channel status information, CSI, report of a user equipment, wherein the information element indicates a size and a starting point of resource blocks or resource block groups configured to a first subband; transmitting, to a base station, the first CSI report for a set of the resource blocks or the resource block groups of the first subband; obtaining configuration information related to a first transmission occasion and a second transmission occasion; and identifying according to the configuration information, a second frequency domain resource used to configure the second transmission occasion, wherein the second frequency domain resource is different from a first frequency domain resource used to configure the first transmission occasion and wherein the second frequency domain resource is configured based on the first CSI report.

According to fifth aspect of the present disclosure, it is provided a computer readable storage medium, on which instructions are stored, when executed by at least one processor, the instructions cause the at least one processor to perform any method according to the third aspect.

According to sixth aspect of the present disclosure, it is provided computer program product comprising instructions which when executed by at least one processor, cause the at least one processor to perform any method according to the fourth aspect.

### BRIEF DESCRIPTION OF THE DRAWINGS

Some example embodiments will now be described, by way of example only, with reference to the accompanying drawings in which:
FIG. 1 illustrates an exemplary block diagram of frequency domain resources of multi-PUSCH CG;
FIG. 2 illustrates another exemplary block diagram of frequency domain resources of multi-PUSCH CG;
FIG. 3 illustrates an exemplary block diagram of frequency domain resources of multi-PUSCH CG according to an embodiment of the present disclosure;
FIG. 4A illustrates an exemplary block diagram of resource allocation in frequency domain;
FIG 4B illustrates an exemplary signaling flow showing a procedure where the resource allocation of FIG 4A is configured;
FIG. 5 illustrates an exemplary block diagram of frequency domain resources of multi-PUSCH CG according to another embodiment of the present disclosure;
FIG. 6 is an exemplary diagram depicting a procedure according to embodiments of the present disclosure;
FIG. 7 is a flow chart depicting a method performed by a base station according to embodiments of the present disclosure;
FIG. 8 is a flow chart depicting a method performed by a UE according to embodiments of the present disclosure; and
FIG. 9 shows a simplified block diagram of an apparatus according to an embodiment of the present disclosure.

### DETAILED DESCRIPTION

Some example embodiments will now be described in more detail hereinafter with reference to the accompanying drawings, in which some, but not all embodiments are shown. Indeed, the example embodiments may take many different forms and should not be construed as fixed to the embodiments set forth herein; rather, these embodiments are provided so that this disclosure will satisfy applicable legal requirements. Like reference numerals refer to like elements throughout.

References in the present disclosure to "one embodiment", "an embodiment", "an example embodiment", and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to affect such feature, structure, or characteristic in connection with other embodiments whether or not explicitly described.

In the following description and claims, unless defined otherwise, all technical and scientific terms used herein have the same meaning as commonly understood by one of ordinary skills in the art to which this disclosure belongs.

As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of "circuitry" applies to all uses of this term in this application, including in any claims. As a further example, as used in this application, the term "circuitry" also covers an implementation of merely a hardware circuit or processor (or multiple processors) or portion of a hardware circuit or processor and its (or their) accompanying software and/or firmware. The term "circuitry" also covers, for example and if applicable to the particular claim element, a baseband integrated circuit or processor integrated circuit for a mobile device or a similar integrated circuit in server, a cellular network device, or other computing or network device.

As defined herein, a "computer-readable storage medium," which refers to a non-transitory physical storage medium (e.g., volatile or non-volatile memory device), can be differentiated from a "computer-readable transmission medium," which refers to an electromagnetic signal. Such a medium may take many forms, including, but not limited to a non-transitory computer-readable storage medium (e.g., non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Examples of non-transitory computer-readable media include a magnetic computer readable medium (e.g., a floppy disk, hard disk, magnetic tape, any other magnetic medium), an optical computer readable medium (e.g., a compact disc read only memory (CD-ROM), a digital versatile disc (DVD), a Blu-Ray disc, or the like), a random access memory (RAM), a programmable read only memory (PROM), an erasable programmable read only memory (EPROM), a FLASH-EPROM, or any other non-transitory medium from which a computer can read. The term computer-readable storage medium is used herein to refer to any computer-readable medium except transmission media. However, it will be appreciated that where embodiments are described to use a computer-readable storage medium, other types of computer-readable mediums may be substituted for or used in addition to the computer-readable storage medium in alternative embodiments.

In the following, certain embodiments are explained with reference to cellular communication terminals (or user equipment (UE)) capable of cellular communication on a radio access, via cells, base stations, WiFi access point or similar wireless transmitter and/or receiver nodes, providing access points for a radio access system. The radio access system can be arranged to allow mobile communication network connections established between a UE and a core network or a network entity of the core network. The radio access system may be a 3GPP access system, or a non-3GPP access system.

The cellular communication terminal or UE may comprise any suitable device capable of at least receiving cellular communication of data. For example, the cellular communication terminal or UE can be handheld data processing device equipped with radio receiver, data processing and user interface apparatus. Non-limiting examples include a mobile station (MS) such as a mobile phone or what is known as a "smart phone", a portable computer such as a laptop or a tablet computer provided with a wireless interface card or other wireless interface facility, personal data assistant (PDA) provided with wireless communication capabilities, or any combinations of these or the like. Further examples include wearable wireless devices such as those integrated with watches or smart watches, eyewear, helmets, hats, clothing, ear pieces with cellular connectivity, jewelry and so on, universal serial bus (USB) sticks with cellular capabilities, modem data cards, machine type devices or any combinations of these or the like.

As mentioned above, some radio access systems support a CG configuration with multiple CG transmission occasions within a CG period. For example, in 3GPP Release 18, enhancements for extended reality (XR) comprise a capacity of supporting multiple CG PUSCH transmission occasions in a period of a single CG PUSCH configuration. It is agreed that multi-PUSCHs CG is supported for Type-1 configured grant; and multi-PUSCHs CG is supported for Type-2 configured grant. Here, "multi-PUSCHs CG" refers to "a CG PUSCH configuration with multiple CG PUSCH transmission occasions within a period of the CG PUSCH configuration". In the embodiments, the term CG transmission occasions may be used interchangeably with CG PUSCH occasions and/or PUSCH occasions.

Considering frequency domain resource allocation for CG transmission, 3GPP defines two schemes for the allocation of frequency resource allocations: Type 0 and Type 1.
- Type 0: This scheme uses a bitmap to allocate specific resource block groups (RBGs). A resource block group (RBG) is a set of contiguous virtual resource blocks (VRB) within a bandwidth part. These RBGs need not be contiguous. Uplink resource allocation Type 0 can be signaled on the physical downlink control channel (PDCCH) using DCI Format 0_1 or on radio resource control (RRC) in case of Type-1 CG configuration.
- Type 1: This scheme uses the resource indication value (RIV) to configure a set of virtual resource blocks. This scheme is used with DCI format 0_0/0_1 or RRC signaling. An uplink type 1 resource allocation field consists of a resource indication value (RIV) corresponding to a starting resource block group (RBGₛₜₐᵣₜ) and a length in terms of virtually contiguously allocated resource group blocks L_{RBGs}.

According to current 3GPP agreements, for PUSCHs parameters in a multi-PUSCHs CG configuration, the configuration/indication parameters except modulation coding scheme (MCS) and frequency domain resource allocation (FDRA) of CG PUSCHs in a multi-PUSCHs CG configuration are required to be the same. Currently in 5G NR, both TDRA and FDRA are also kept the same for the multiple CG PUSCH occasions within a CG period. For example, considering the scenarios where UL XR frames are carried through PDU sets over CG PUSCH resources, according to the current 3GPP specifications, the frequency resource allocation are fixed once the CG configuration (in UL Type-1 CG) and/or an activation of CG configuration (in UL Type-2 CG) is done.

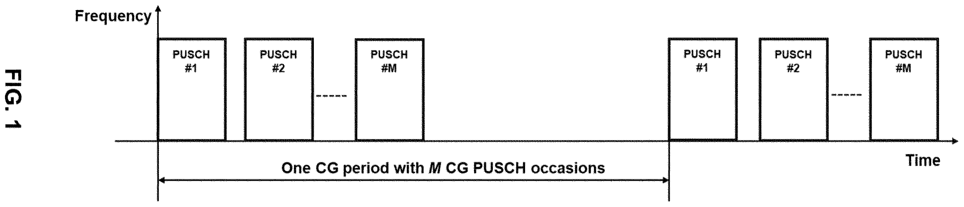

One example of CG resource configuration is illustrated in FIG. 1, with a same FDRA for all CG PUSCH occasions in a CG period. As shown in FIG. 1, frequency domain resources (e.g., RBs or RBGs) allocated to each of the M PUSCH occasions (i.e., transmission occasions for PUSCH #1, PUSCH #2, ..., PUSCH #M) do not change within one CG period.

No solution has been proposed so far to support different FDRA, especially considering the solutions which can be applied to both Type-1 and Type-2 CG configurations.

This disclosure considers potential benefits (such as increased reliability) to have different frequency domain resources allocated for different CG PUSCH transmission occasions within one CG period. For example, with different FDRA for different CG PUSCH occasions, one could achieve better frequency diversity even in a case that a same amount of frequency domain resources is allocated to the different CG PUSCH occasions. With different FDRA for different CG PUSCH occasions, one could also achieve better UE energy consumption over time by dynamically changing the frequency domain resources according to channel and buffer status. In addition, with increasing frequency domain resources allocated to a later CG PUSCH occasion, an extra/additional frequency resource for the later transmission blocks (TBs) transmission of a same PDU set could achieve same/similar reliability for the later TBs, for example in a scenario where the later TBs cannot be retransmitted as the earlier TBs.

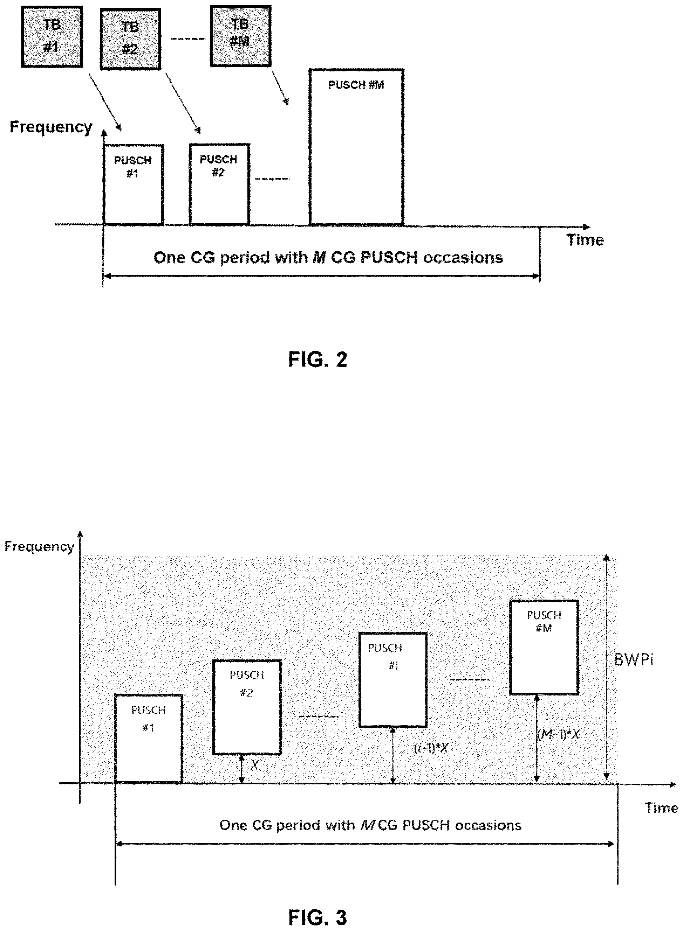

FIG. 2 illustrates an example of changing frequency domain resource for XR traffic transmission. As shown in FIG.2, the amount of frequency domain resources allocated to the CG occasion for PUSCH #M is increased with respect to its previous CG occasion, such as previous CG occasions for PUSCH #1 and PUSCH #2. The size of TB (denoted as TB #M) to be transmitted over PUSCH #M is same as TB #1 and TB #2 transmitted over PUSCH #1 and PUSCH #2, respectively. This may occur in a scenario where for the earlier TB (e.g., TB #1), there is possibility for retransmission within a delay budget, however, there is no possibility for retransmission for the later TB (e.g.,TB #M). In this case, if a same amount of frequency domain resource is used for TB#1 and TB#M, then clearly TB #1 would have a better reliability (e.g., it has two transmissions opportunities in total) than TB #M, because TB #M has only one transmission opportunity without any retransmission possibility. With the proposed variable frequency domain resource, more robust modulation coding scheme (MCS) which require more frequency domain resources can be selected for the later TB (e.g., TB#M). Then the final reliability level of TB#1 and TB#M can be the same or similar.

In this disclosure, an enhanced CG mechanism is proposed to enable variable frequency domain resources allocation over multiple CG occasions within a CG period. In this regard, a base station determines a second frequency domain resource different from a first frequency domain resource within a CG period. The first frequency domain resource is used to configure a first CG transmission occasion and the second frequency domain resource is used to configure a second CG transmission occasion within the CG period. Then the base station transmits, e.g., to a UE, configuration information related to the first CG transmission occasion and the second CG transmission occasion. It should be noted that the disclosed enhancements can be applied to semi-persistent scheduling (SPS) as well, where for example multiple SPS transmission occasions within a SPS period.

The UE obtains the configuration information related to the first CG transmission occasion and the second CG transmission occasion within the CG period, and then identifies according to the configuration information, a second frequency domain resource used to configure the second CG transmission occasion, wherein the second frequency domain resource is different from a first frequency domain resource is used to configure the first CG transmission occasion.

In order to support variable frequency domain resources allocation, a base station may configure a configuration information (e.g., by virtue of a rule) to indicate how to change a frequency domain resource (such as a set of resource blocks or resource block groups) allocated to at least one CG transmission occasion within a CG period with respect to other CG transmission occasions within the CG period. The rule may indicate or define how to change the frequency domain resource allocated to the at least one CG transmission occasion. For example, a gNB can configure different frequency resources to each CG PUSCH occasions in a CG period. Since the resource allocation for the first CG PUSCH occasion is a kind of baseline in terms of frequency domain resource, then the frequency domain resource allocated for its subsequent CG PUSCH occasions may be configured with a delta value which indicates a kind of frequency domain resource "change".

The change to the frequency domain resource may comprise shifting a position of the second frequency domain resource allocated to the second CG transmission occasion, with respect to the first frequency domain resource allocated to the first CG transmission occasion. The change to the frequency domain resource may comprise adjusting (e.g., increasing or decreasing) an amount of the second frequency domain resource allocated to the second CG transmission occasion, with respect to the first frequency domain resource allocated to the first CG transmission occasions. For example, the configuration information related to the first CG transmission occasion and the second CG transmission occasion may comprise an indication of the rule.

One CG period may comprise two or more CG transmission occasions, including the first CG transmission occasion and the second CG transmission occasion. The base station may transmit an application pattern of the two or more CG transmission occasions. The application pattern indicates which CG transmission occasion within a CG period is the second CG transmission occasion. In case that a rule of frequency resource allocation change is defined, the application pattern may indicate or define to which CG transmission occasion(s) the rule is applied. The application pattern may be transmitted together with the configuration information or separately.

The base station may configure resources for a CG transmission over an uplink channel for a user equipment (UE), according to the configured rule. The configuration of resources may comprise sending, to the user equipment, configuration information which indicates the rule. The enhanced CG mechanism proposed here supports both Type-1 configured grant and Type-2 configured grant. Then, the configuration of resources may be implemented through frequency resource allocations of Type 0 and/or Type 1. In this regard, the frequency resource allocations and/or the rule may be signaled to the UE on PHY signaling (e.g., via PDCCH) and/or on L2 signaling (e.g., via RRC). In some embodiments, RRC is configured to be used to signal the frequency resource allocations and the rule. This purely RRC configuration-based solution is applicable to both CG types.

In an exemplary scenario, the amount of resources (such as resource blocks (RBs) or resource block groups (RBGs)) in frequency domain allocated to the at least one CG transmission occasion is kept unchanged with respect to the other CG transmission occasions within the CG period. For example, all CG transmission occasions within the CG period utilize a same amount of RBs or RBGs for CG transmission, and a position of RBs or RBGs occupied by a CG transmission occasion is variable. The base station may configure a rule for the position change of frequency domain resource (e.g., keeping the same amount of frequency domain resource, but shifting the position of the allocated frequency domain resource) from one CG PUSCH transmission occasion to another one.

In another exemplary scenario, the amount of resources (such as RBs or RBGs) in frequency domain is adjusted (e.g. increased or decreased) for a later TBs of the same PDU set. It may refer to either increasing or decreasing the amount of occupied RBs or RBGs in frequency domain from one CG PUSCH occasion to another one. In an example, one bit in RRC signaling may be set to indicate whether the adjustment is to increase the amount of occupied RBs or RBGs or to decrease the amount of occupied RBs or RBGs. For example, "0" of the bit is set for increasing, and "1" set for decreasing.

More details of the proposed enhanced CG mechanism would be discussed with reference to FIGs. 3 to 9.

For the scenario in which a same amount of occupied RBs in frequency domain is kept for each CG transmission occasion, a base station may configure a rule to shift the allocated frequency domain resource. One example of the rule may be to shift an index of the starting RBs/RBGs of a set of RBs/RBGs allocated to each CG transmission occasion by X, with respect to its respective previous CG transmission occasion. This example may be implemented in different manners in dependent on different UL resource allocation types.

In a scenario where uplink resource allocation Type 0 is used for configuring resources of CG transmission, a bitmap is used to allocate RBGs for a CG transmission occasion. Then, such bitmap may be used to indicate the shift of the index of the starting RBG. In an example, a UE's frequency domain resource allocation bitmap within a BWP (assuming the BWP including 8 RB groups) is 11100000, for the first CG PUSCH occasions. In case the value *X* is configured as 2, a bitmap of the frequency domain resource allocated to the second CG PUSCH occasion would be 00111000, and a bitmap for the third CG PUSCH occasion would be 00001110, a bitmap for the fourth CG PUSCH occasion would be 10000011, and so on. The main concept of this exemplary rule is to keep the same bitmap order but shifting the starting RB index.

In a scenario where uplink resource allocation Type 1 is used for configuring resources of CG transmission, a resource indication value (RIV) is used to allocate a set of RBs or RBGs for a CG transmission occasion. Then, such RIV may be used to indicate the shift of the index of the starting RBG. In an example, a rule is configured to increase the index of the starting RB by *X* and keeping the length of frequency domain resource. For example, the index (RBstart of RIV) of the starting RB for the RIV for the first CG PUSCH occasion, i.e., RBstart = 0, then the index of the starting RB for the second CG PUSCH occasion would be RBstart = *X*, the index of the starting RB for the third CG PUSCH occasion would be RBstart = 2*X*, and so on. One additional change may be that, in case the RB index (could be any of the allocated RBs) is larger than a total number of RBs within an allocated BWP, a modulo algorithm can be applied. For example, in case in total 32 RBs within the BWP, the real index of the RB to be occupied is: MOD (RB index, total number of RBs in the BWP). Thus, if the RBstart calculated according to the rule for a CG PUSCH occasion is larger than a total number of RBs in the BWP, the above Mod function may be used to determine the real index of the starting RB.

FIG. 3 illustrates an exemplary block diagram of variable frequency domain resources allocation for multi-PUSCH CG in a CG period. As shown in FIG. 3, all of the *M* CG PUSCH occasions are allocated with a same number of RBs. But the RBs allocated to the *M* CG PUSCH are different in frequency domain. The example rule defines a shift of *X* RBs/RBGs between adjacent CG PUSCH occasions. In this example, a starting point of the frequency domain resources allocated to CG PUSCH #2 is shifted upward by *X,* with respect to its previous CG transmission occasion for CG PUSCH #1. Based on the rule, it can be derived that, a starting point of the frequency domain resources allocated to a particular CG PUSCH *#i* would be shifted upward by (*i*-1)**X* with respect to the CG transmission occasion for CG PUSCH #1, and a starting point of the frequency domain resources allocated to the last CG PUSCH #M would be shifted upward by (M-1)**X* with respect to the CG transmission occasion for CG PUSCH #1.

In some embodiments, the rule for a change of frequency domain resource may be preconfigured by the based station. For example, there may be a default rule defined by related specifications, and commonly known be a base station and a UE in advance. In some embodiments, the rule can be applied to DL Physical Downlink Shared CHannel (PDSCH) transmission as well with semi-persistent scheduling (SPS) type of resource allocation.

In some embodiments, a base station may select and/or adjust a rule for a change of frequency domain resource allocation according to channel status reports from a UE. In this regard, the frequency domain resource allocation may be for example performed for UL CG, UL SPS, or DL SPS. The base station may configure a reporting scheme of the channel status report, so that a size and starting point of RBs or RBGs reported in the channel status report can indicate configured frequency domain resource allocation. For example, the base station may reconfigure a channel quality indication (CQI) reporting scheme to work with the shifting of frequency domain resources for Multi-PUSCH CG or SPS. A gNB may configure a subband CQI reporting (e.g., as defined in section 5.2.1.4 of 3GPP TS 38.214 V17.5.0), so that a size and starting point of RBs/RBGs reported in the CQI reporting can reflect the CG or SPS frequency domain allocation.

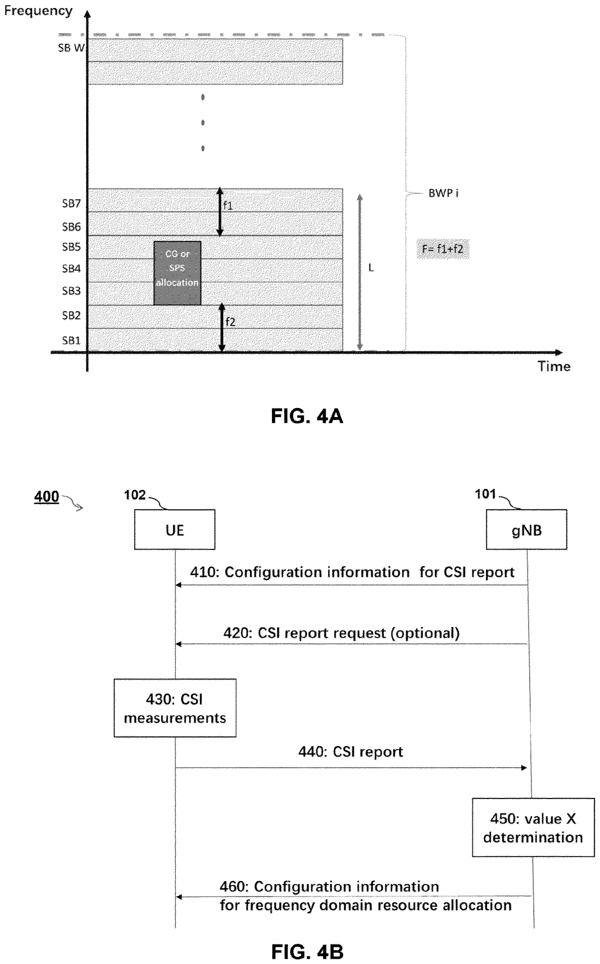

FIG. 4A illustrates an exemplary block diagram of resource allocation in frequency domain, and FIG 4B illustrates an exemplary signaling flow showing a procedure where the resource allocation of FIG 4A is configured. As shown in FIG. 4A, the frequency domain allocation is configured in a certain bandwidth part (denoted as BWPᵢ) with a number of PRBs, and *L* subbands (in this example, 7 subbands, indexed by SB1, SB2, ..., SB7) of the BWPi are available for frequency domain allocation, wherein three subbands (SB3, SB4, SB5) have been allocated for a transmission occasion (e.g., indicated via PUSCH #i in FIG. 3). In the embodiments, the frequency domain allocation may be a CG frequency domain allocation for UL transmission or an SPS frequency allocation for UL transmission or DL reception. The CG or SPS frequency domain allocation is configured by the gNB.

A gNB may configure a subband CQI reporting to facilitate CG or SPS frequency domain allocation. As shown at step 410 of FIG. 4B, the gNB 101 transmits a message or signaling including at least an information element (IE) configuring a channel status information (CSI) report of a UE 102. The IE indicates a size and a starting point of RBs or RBGs configured to one or more subbands. The subbands may cover subbands (such as SB3, SB4, SB5) that have been allocated for a transmission occasion.

As show at step 420 in FIG. 4B, the gNB may request a UE to report the channel condition via e.g., CSI report (including subband CQI values) for a set of clustered RBs of SB3, SB4, SB5. In another example, the gNB may request a UE to report the CSI report (including subband CQI values) for a set of clustered RBs of the total *L* subbands.

At step 430, the UE is able to calculate/measure the channel status information CSI (e.g., CQI) regarding the configured at least one CG transmission occasion and/or at least one SPS transmission occasion. The calculation or measurement of the CSI may be performed periodically, or event triggered way or requested by the gNB (e.g., the request of step 420).

Then, the UE transmits the measured (or, calculated) CSI reports to the gNB, at step 440.

At step 450, based on these CSI reports (e.g., CQI values) received from the UE, the gNB may determine, select or find a suitable value for *X.* Then, the gNB transmits to the UE, configuration information which may comprise or indicate the determined value of *X*, at step 460.

In some embodiment, a base station can adjust a value *X* based on channel status reports for neighboring subbands from a UE. In this regard, the base station can determine if there are some neighboring subbands with better channel conditions, and if so, the frequency domain resource allocation can be adjusted and updated. This can be done for each set of the *M* transmission occasions, such as *M* PUSCH occasions (in case with UL CG or SPS) or *M* PDSCH occasions (in case with DL SPS). The value *X* may be set as the same for all the *M*-1 transmission occasions (without the very first transmission occasion), or be set independently (e.g., differently) for each of the *M-1* transmission occasions.

Additionally or alternatively, the base station can configure and request the UE to report CSI reports for at least one subband surrounding the subbands occupied by the configured frequency domain resource allocation, as shown at step 410 and 420, or at a following step (not shown). For example, as indicated in FIG. 4A, instead of reporting the CQI values for all *L* subbands (7 subbands in this example), the gNB may ask to only report CQI values for one or more surrounding subbands (e.g., SB1, SB2, SB6, SB7), including f1+f2= 4 subbands. As can be seen, less number of subbands need to be reported, i.e., *F* (=f1+f2) < L. So the gNB can estimate the channel of the surrounding subbands to the CG or SPS allocation. In this example, if CQI values of f1 subbands (SB1 and SB2) turn out to be better that the values reported earlier for SB3, SB4, SB5, then the gNB can decide to move the CG or SPS allocation towards the subbands in f1 subbands. As such, a better resource allocation can be achieved.

This can be applied in two different ways. In one way, there is no new signaling introduced, and the gNB may use the CQI reporting related signaling (e.g., CSI report configuration information element (IE)) on top of the CG or SPS configuration signaling (with high overhead), at step 410 and 420. Use a DL SPS as example here. A gNB may configure DL SPS resources. Within a same configuration message as those messages for DL SPS resources configuration, or within a different message, the gNB can configure CQI reporting, which notify the UE about the subbands which are to be measured from a UE side. The UE measures or calculates CQI values of the received signals in different subbands according to the gNB configuration for CQI acquisition. Then, the UE sends CQI reports back to the gNB. Based on the CQI reports, the gNB may adjust the allocated resources and potentially reconfigure the allocated resources. In this way, current signaling may be utilized to delivery configuration information for CQI acquisition.

In another way, new signaling (which may require further standardization) is introduced. The gNB signals a UE the CG or SPS configurations and an additional linkage information (i.e., relevant information needed to do subband CQI reporting such as values for *L* and *F*) that overwrite configuration of the current CQI reporting scheme. The linkage information may comprise (but not limited to) CQI subband reporting configuration, including what is already defined in the specifications or any additional information such as *F* and *L* that depend on the allocated resources of the UE. There could be other information such as the relation between the periodicity of the CQI reporting and the CG/SPS periodicities. In this way, the CQI measurements and reporting are linked into actual allocated resources and potential subbands (such as the surrounding subbands) for adjustment of frequency domain resource allocation.

It should be appreciated that, the above embodiments for shifting frequency domain resource allocation within a CG or SPS period are described as an example, and more other frequency shifting/hopping rules can be configured for the change of frequency domain resource allocation of this disclosure.

For the scenario in which an amount of occupied RBs in frequency domain would be adjusted for later TBs to be transmitted in later CG transmission occasions, a base station may configure a rule to adjust the allocated frequency domain resource. In an example, the rule may be configured to indicate how to increase or decrease an amount of the frequency domain resource allocated to a CG transmission occasion with respect to its previous CG transmission occasion.

Take increasing the amount of occupied RBs as an example. In addition to a sign indicating that the adjustment is increasing, gNB can configure the rule about how to increase frequency resources. For example, the rule may be configured to increase an amount of RBs or RNGs allocated to each CG transmission occasion by a certain delta value (e.g., *N* RBs/RBGs), with respect to its respective previous CG transmission occasion. The simplest way would be to have a same delta value even in case there will be multiple changes within one CG period.

An indication for such adjustment in frequency domain resource allocation (i.e., how to indicate the new RBs to be occupied) may be implemented in a manner independent on different UL resource allocation types. In a scenario where uplink resource allocation Type 0 is used for configuring resources of CG transmission, a bitmap may be used to indicate an increasement for an amount of RBs allocated to each CG transmission occasion. In an example, a UE's resource allocation bitmap within a BWP (assuming the BWP including 8 RB groups) is 11100000, for the first CG PUSCH occasions. In case the delta value *N* is configured as 2 RBGs, a bitmap of the frequency domain resource allocated to the second CG PUSCH occasion with extra RBGs would be 11111000.

In a scenario where uplink resource allocation Type 1 is used for configuring resources of CG transmission, a RIV may be used to indicate an increasement for an amount of RBs allocated to each CG transmission occasion. One simple approach is to keep an index of a starting RB as a certain value and increase a length of frequency domain resource allocated to each CG transmission occasion. For example, in case that the length (L_{RBGs} of RIV) for the first CG PUSCH occasion is 10RBGs, i.e., L_{RBGs} = 10 RBGs, then the length of the frequency domain resource with extra RBGs for the second CG PUSCH occasion would be L_{RBGs} = 12 RBGs.

Similar as in the embodiment discussed above in which a RIV is used to indicate the shift of the index of the starting RBG, a modular operation is needed in some cases as well.

That is, in case the index of one of the allocated RBs or RBGs is larger than a total number of RBs or RBGs within an allocated BWP, a modulo algorithm can be applied. For example, in case in total 32 RBs within the BWP, the real length of RBs to be occupied is: Mod (index of RBs, total number of RBs in the BWP). Thus, if the index of one RB calculated according to the rule for a CG PUSCH occasion is larger than a total number of RBs in the BWP, the above MOD function may be used to determine the index of RBs to be allocated to a CG PUSCH occasion.

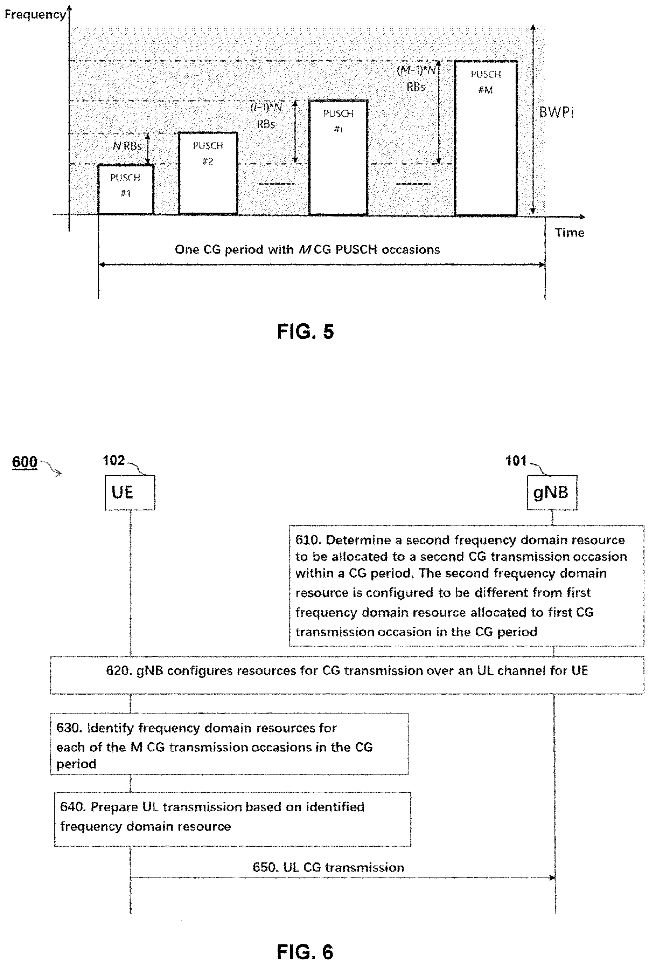

FIG. 5 illustrates an exemplary block diagram of variable frequency domain resources allocation for multi-PUSCH CG in a CG period. As shown in FIG. 5, all the CG PUSCH occasions are allocated with different numbers of RBs. In this example, an increased amount of resources in frequency domain is allocated to each later CG PUSCH occasion, with keeping a starting point (e.g., index of a starting RB) of allocated frequency domain resource of each later CG PUSCH occasion unchanged. An example rule may define a delta value of NRBs between the lengths of adjacent CG PUSCH occasions. For example, the length of the frequency domain resources allocated to CG PUSCH #2 is *N* RBs longer than its previous CG transmission occasion for CG PUSCH #1. Based on the rule, it can be derived that, a length of the frequency domain resources allocated to CG PUSCH #*i* would be (*i*-1)**N* larger than the CG transmission occasion for CG PUSCH #1, and a length of the frequency domain resources allocated to CG PUSCH #M would be (M-1)*N larger than the CG transmission occasion for CG PUSCH #1.

The embodiments regarding selecting and/or adjusting a rule for a change of frequency domain resource according to channel status reports from a UE can be also applied here. In this regard, the gNB can use the channel status reports (such as subband CQI values) or the received sounding reference signal to select suitable value of *N,* or configure or adjust the value of *N*. For example, at step 450 in FIG. 4B, based on the subband CQI values received from the UE, the gNB may determine, select or find a suitable value for *N.*

It should be appreciated that, the above embodiments for adjusting an amount of frequency domain resources within a CG period are described as an example, and more other rules for adjusting an amount of frequency domain resources can be configured for a change of frequency domain resource allocation of this disclosure.

In the examples of both FIG. 3 and FIG. 5, it can be noted that it is assumed that the change of the frequency domain resource is applicable to every CG PUSCH occasions after the first one. However, in some embodiments, the change of the frequency domain resource may be applied to a part of G PUSCH occasions within a CG period. In this regard, a gNB can configure an applicable pattern to define where the change of frequency domain resource can be applied. The application pattern can indicate which CG PUSCH occasions would be allocated with different frequency resources, with respect to previous CG PUSCH occasions.

One example of the application pattern could be bitmap-based, such as a bitmap each bit of which corresponds to one CG PUSCH occasion of the multiple CG PUSCH occasions within a CG period. For example, a bit of "0" may means using an originally configured value of a length of occupied frequency domain resources for a corresponding CG PUSCH occasion, and a bit of "1" may means using an increasing length of occupied frequency domain resources with extra RBs for a corresponding CG PUSCH occasion. Alternatively, a bit of "0" may means keeping a position of occupied frequency domain resources for a corresponding CG PUSCH occasion unchanged, and a bit of "1" may means shifting a starting point of frequency domain resources allocated for a corresponding CG PUSCH occasion.

An alternative example is to indicate a starting CG PUSCH occasion where a frequency shift or extra RBs will be used. For example, a gNB may notify a UE that a frequency shift or extra RBs would be applied with a CG period from a third CG PUSCH occasion, by sending an index of the third CG PUSCH occasion to a UE. Accordingly, a frequency shift or extra RBs would not be applied for the second CG PUSCH occasion but would be applied for all other CG PUSCH occasions in a CG period.

In some embodiments, a gNB can dynamically activate/deactivate a change of frequency domain resource allocation according to a configured rule. A change of frequency domain resource allocation may be activated for some CG periods and may be deactivated for other CG periods. For example, the activation and deactivation may be triggered dynamically based channel status reports received from a UE, received UL signaling quality, traffic data to be transferred by CG transmission, and other factors.

In some embodiments, a gNB can configure criteria to activate a change of frequency domain resource allocation. For example, if a remaining time budget for data transmission is smaller than a threshold, a change of frequency domain resource allocation for CG transmission occasions would be activated.

Referring now to FIG. 6, an exemplary signaling procedure 600 for configuring a change of frequency domain resource allocation for CG transmission occasions is illustrated. At step 610, a base station (such as a gNB 101) determines a second frequency domain resource to be allocated to a second CG transmission occasion within a CG period. The second frequency domain resource is configured to be different from first frequency domain resource allocated to first CG transmission occasion in the CG period. In an example, the gNB 101 configures a rule indicating a change of second frequency domain resource compared to the first frequency domain resource. The rule may be a pre-defined rule stored in the gNB 101, as specified in some protocols. Alternatively, the rule may be configured or selected according to channel status reports received from a UE (such as UE 102) or the quality of UL reception. For example, the gNB 101 may request the UE 102 to report CQI values for one or more subbands covering configured frequency domain resource allocation, and then configure a rule or select a rule from one or more pre-defined rule according to reported CQI values.

At step 620, The base station (such as gNB 101) configures resources for CG transmission over an UL channel for UE. The base station may transmit configuration information related to the first CG transmission occasion and the second CG transmission occasion, e.g., to a user equipment. For example, the gNB 101 may indicate to the UE 102 frequency domain resource allocation (FDRA) for each CG transmission occasion though uplink resource allocation Type 0 or Type 1. In this regard, the configured information may be transmitted to the UE 101 through a bitmap (uplink resource allocation Type 0) or RIV (uplink resource allocation Type 1).

After obtaining from the gNB 101 a configuration for resources of a CG transmission, the UE 102 may identify as shown at step 630, frequency domain resources allocated to CG transmission occasions within a CG period, according to the received configured information. In an example, the UE can know the allocated FDRA for each CG PUSCH occasion within a period based on the received configuration information. Depending on an "order" of a given CG PUSCH occasion within a period, UE can identify or find a correct FDRA for the given CG PUSCH occasion. For example, the UE can derive or determine a position of a frequency domain resource for a particular CG transmission occasion PUSCH #i, according to a shift of index (*i*-1)**X* of its starting SB, and/or extra RBs (*i-*1)**N,* as shown in FIG. 3 and FIG. 5.

Then, the UE 102 can prepare the CG transmission over an uplink channel (such as PUSCH) through the determined frequency domain resources, as shown at step 640. Such preparation can include for example transport block (TB) formulation, channel coding, resource element (RE) mapping, antenna panel selection and so on. Then, the UE 102 may transmit data over the uplink channel by using the determined frequency domain resources.

Although not shown in FIG. 6, the gNB 101 may request the UE 102 to transmit channel status reports for RBs or RBGs of at least one subband surrounding the subbands occupied by the configured frequency domain resource allocation. In this regard, the gNB 101 may signal the UE a CG or SPS configuration and surrounding subbands for whose RBs and RBGs a reporting CQI value is requested. Based on the received CQI values for RBs and RBGs of the surrounding subbands, the gNB 101 may adjust or re-configure the rule for change of frequency domain resource allocation.

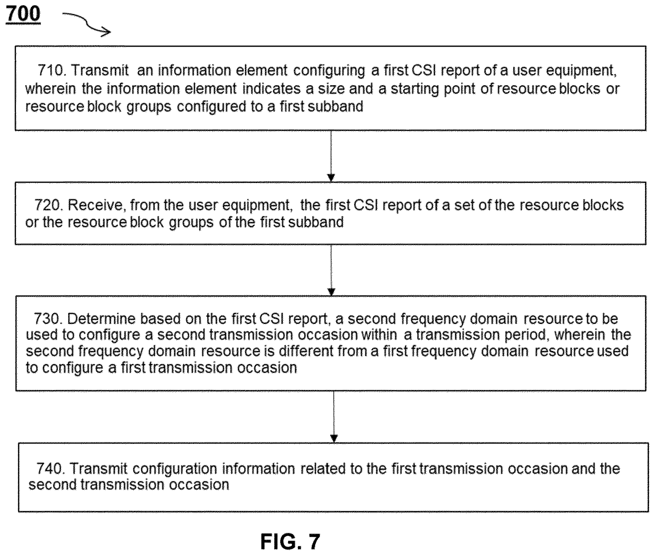

FIG. 7 is a flow chart depicting a method 700 according to embodiments of the present disclosure. The method 700 can be implemented at a base station, which may be gNB, such as gNB 101. For example, the method 700 may be implemented at gNB 101 as shown in FIG. 6. It can be appreciated that the method 700 may be implemented at other network nodes or devices.

As shown at block 710, the method 700 comprises transmitting by a base station, such as gNB 101, an information element (IE) configuring a first channel status information (CSI) report (such as CQI reporting) of a user equipment. The IE indicates a size and a starting point of resource blocks or resource block groups configured to a first subband (such as SB3, SB4, SB5 in the example shown in FIG. 4A). Then the method 700 further comprises receiving, from the user equipment, the first CSI report for a set of the resource blocks or the resource block groups of the first subband, as shown at block 720. In an example, the base station may request the user equipment to report the first CSI report, and then receive the CSI report in response.

As shown at block 730, the method 700 further comprises determining based on the first CSI report, a second frequency domain resource to be used to configure a second transmission occasion, the second frequency domain resource is different from a first frequency domain resource used to configure a first transmission occasion. Then, as shown at block 740, the method 700 further comprises transmitting configuration information (such as a rule of the FDRA change) related to the first transmission occasion and the second transmission occasion.

The first transmission occasion and the second transmission occasion may be transmission occasions for a downlink semi-persistent scheduling (SPS) type of resource allocation or an uplink configured grant (CG) type of resource allocation.

In some embodiments, the method 700 further comprises receiving from the user equipment, a second CSI report for resource blocks or resource block groups of a second subband (such as SB1, SB2, SB6, SB7 in the example shown in FIG. 4) surrounding the first subband. The second frequency domain resource may be determined based on the second CSI report. Although not shown, the method 700 may further comprise transmitting a request to the user equipment for the second CSI report. The request may comprise an indication of the second subband, such as the parameters L, f1, f2, and F. Then, the base station may adjust FDRA (such as the rule of FDRA change) based on the received second channel status report for the resource blocks or resource block groups of the second subband. The adjusting may be performed for several transmission periods, so as to figure out if a better resource allocation can be achieved.

In an embodiment, the configuration information comprises a shift value (such as, with the value X as illustrated in FIG. 3) of a starting resource block or resource block group of the second frequency domain resource with respect to the first frequency domain resource. The configuration information may comprise a frequency domain resource allocation bitmap configured to allocate for the first transmission occasion. The shift value may indicate shifting an index of the starting resource block or resource block group of the frequency domain resource allocation bitmap. An amount of the second frequency domain resource may be kept unchanged with respect to the first frequency domain resource. In an embodiment, the method 700 may further comprise determining the shift value based on at least one of the first CSI report and the second CSI report.

In an embodiment, an amount of the frequency domain resource allocated to different transmission occasions would be different. The configuration information comprises an indication indicating an amount of the second frequency domain resource different from an amount of the first frequency domain resource. The rule may comprise at least one of the following information: an indication (such as a sign of a delta value) indicating whether an amount of the second frequency domain resource is to be increased or decreased, with respect to the first frequency domain resource; or a number (such as the delta value, e.g., *N* illustrated in FIG. 5) of resource blocks or resource block groups to be increased or decreased for the second frequency domain resource, with respect to the first frequency domain resource. In some embodiments, the rule may comprise an indication indicating how resource blocks or resource block groups are to be occupied by the second frequency domain resources allocated to the second transmission occasion. For example, a bitmap may be used to indicate specific RBs or RBGs allocated to a transmission occasion. In an embodiment, the method 700 may further comprise determining based on at least one of the first CSI report and the second CSI report, the number of resource blocks or resource block groups to be increased or decreased for the second frequency domain resource allocated to the second transmission occasion with respect to the first frequency domain resource allocated to the first transmission occasion.

In an example, the base station (such as a gNB) may transmit the configuration information to a UE over an downlink channel (e.g., PDSCH carrying RRC signaling). For example, a gNB may indicate to the UE frequency domain resource allocation (FDRA) for each transmission occasion though uplink resource allocation Type 0 or Type 1 (taking UL CG as example). In this regard, the block 740 may comprise sending a configured rule of FDRA change to the UE, e.g., through a bitmap (uplink resource allocation Type 0) or RIV (uplink resource allocation Type 1). Then, the base station can receive uplink data from the UE, via at least one of the first transmission occasion or the second transmission occasion.

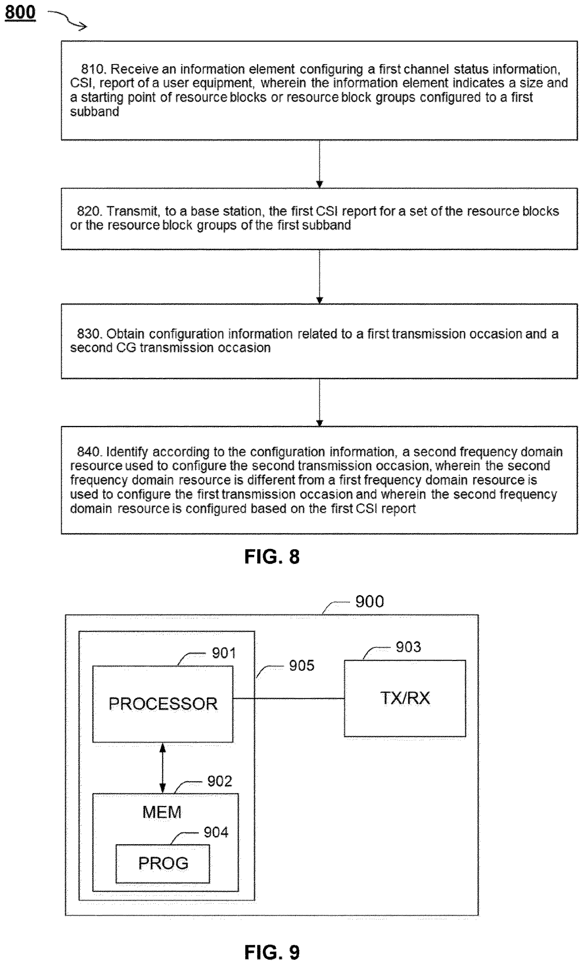

FIG. 8 is a flow chart depicting a method 800 according to embodiments of the present disclosure. The method 800 can be implemented at a user equipment, which may be any suitable cellular communication device. For example, the method 800 may be implemented at the UE 101. It can be appreciated that the method 800 may be implemented at other devices.

As shown at block 810, the method 800 comprises receiving an information element configuring a first channel status information (CSI) report (e.g., a CQI report) of a user equipment. The information element indicates a size and a starting point of resource blocks or resource block groups configured to a first subband (such as SB3, SB4, SB5 in the example shown in FIG. 4A). At block 820, the method 800 further comprises transmitting, to a base station (such as a gNB), the first CSI report for a set of the resource blocks or the resource block groups of the first subband.

As shown at block 830, the method 800 further comprises obtaining configuration information related to a first transmission occasion and a second transmission occasion. For example, the UE may receive from a base station (such as a gNB), the configuration information. The configuration information may be of uplink resource allocation Type 0 or Type 1.

The method 800 further comprises identifying according to the configuration information, a second frequency domain resources used to configure the second transmission occasions, as shown at block 840. The second frequency domain resource is different from a first frequency domain resource used to configure the first transmission occasion. The second frequency domain resource is configured based on the first CSI report. For example, in case with UL CG, the UE can derive or find a position of a frequency domain resource for a particular CG transmission occasion PUSCH #i, according to a shift of index (*i-*1)**X* of its starting RB or RBGs, and/or extra RBs/RBGs (*i*-1)**N*, as shown in FIG. 3 and FIG. 5

In an embodiment, the UE may receive a request for the first CSI report from the base station. The request may comprise the configuration of the CSI report, such as an indication of subbands whose channel status is to be reported. In response to the request, the CSI report may be transmitted to the base station.

In some embodiments, the method 800 may further comprise transmitting to the base station, a second CSI report for resource blocks or resource block groups of a second subband surrounding (such as SB1, SB2, SB6, SB7 in the example shown in FIG. 4) the first subband. In this regard, the UE may receive from the base station, a request for the second CSI report. The request may comprise an indication of the surrounding second subband, such as the values of parameters f1, f2, F, L shown in FIG. 4.

Now reference is made to FIG. 9 illustrating a simplified block diagram of an apparatus 900 that may be embodied in/as a cellular communication device (such as a UE), or a base station (such as a gNB). The apparatus 900 may comprise at least one processor 901, such as a data processor (DP) and at least one memory (MEM) 902 coupled to the at least one processor 901. The apparatus 900 may further comprise one or more transmitters TX, one or more receivers RX 903, or one or more transceivers coupled to the one or more processors 801 to communicate wirelessly and/or through wireline.

Although not shown, the apparatus 900 may have at least one communication interface, for example, the communicate interface can be at least one antenna, or transceiver as shown in the FIG. 9. The communication interface may represent any interface that is necessary for communication with other network entities.

The processors 901 may be of any type suitable to the local technical environment, and may include one or more of the following: general purpose computers, special purpose computers, microprocessors, digital signal processors (DSPs) and processors based on multicore processor architecture, as non-limiting examples.

The MEMs 902 may be of any type suitable to the local technical environment and may be implemented using any suitable data storage technology, such as semiconductor-based memory devices, magnetic memory devices and systems, optical memory devices and systems, fixed memory and removable memory, as non-limiting examples.

The MEM 902 stores a program (PROG) 904. The PROG 904 may include instructions that, when executed on the associated processor 801, enable the apparatus 900 to operate in accordance with the embodiments of the present disclosure, for example to perform one of the methods 700 and 800. A combination of the at least one processor 901 and the at least one MEM 902 may form processing circuitry or means 905 adapted to implement various embodiments of the present disclosure.

Various embodiments of the present disclosure may be implemented by computer program executable by one or more of the processors 901, software, firmware, hardware or in a combination thereof.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosures may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosures may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium, for example, non-transitory computer readable medium, such as a hard disk, optical disk, removable storage media, solid state memory, RAM, etc. As will be appreciated by one of skills in the art, the function of the program modules may be combined or distributed as desired in various embodiments. In addition, the function may be embodied in whole or in part in firmware or hardware equivalents such as integrated circuits, field programmable gate arrays (FPGA), and the like.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, the term "and/or" includes any and all combinations of one or more of the listed terms.

As used herein, the phrase "at least one of A and B" or "at least one of A or B" should be understood to mean "only A, only B, or both A and B." The phrase "A and/or B" should be understood to mean "only A, only B, or both A and B".

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure.

## Claims

1. An apparatus implemented at a user equipment (UE) for wireless communication, the apparatus comprising:
at least one processor; and
at least one memory storing instructions that, when executed by the at least one processor, cause the apparatus at least to:
receive an information element configuring a first channel status information, CSI, report of a user equipment, wherein the information element indicates a size and a starting point of resource blocks or resource block groups configured to a first subband;
transmit, to a base station, the first CSI report for a set of the resource blocks or the resource block groups of the first subband;
obtain configuration information related to a first transmission occasion and a second transmission occasion; and
identify according to the configuration information, a second frequency domain resource used to configure the second transmission occasion, wherein the second frequency domain resource is different from a first frequency domain resource used to configure the first transmission occasion and wherein the second frequency domain resource is configured based on the first CSI report.

2. The apparatus according to claim 1, wherein when the instructions are executed by the at least one processor, further cause the apparatus at least to:
transmit, to the base station, a second CSI report for resource blocks or resource block groups of a second subband surrounding the first subband.

3. The apparatus according to claim 2, wherein when the instructions are executed by the at least one processor, further cause the apparatus at least to:
receive a request from the base station for the second CSI report;
wherein the request comprises an indication of the second subband.

4. The apparatus according to any of claims 1 to 3, wherein the configuration information comprises a shift value indicating a shift of a starting resource block or resource block group of the second frequency domain resource with respect to a starting resource block or resource block group of the first frequency domain resource, and wherein the shift value is configured based on at least one of the first CSI report and the second CSI report.

5. The apparatus according to any of claims 1 to 3, wherein the configuration information comprises an indication indicating a number of resource blocks or resource block groups to be increased or decreased for the second frequency domain resource allocated to the second transmission occasion with respect to the first frequency domain resource allocated to the first transmission occasion, and wherein the number is determined based on at least one of the first CSI report and the second CSI report.

6. A method performed at a user equipment (UE) for wireless communication, the method comprising:
receiving an information element configuring a first channel status information, CSI, report of a user equipment, wherein the information element indicates a size and a starting point of resource blocks or resource block groups configured to a first subband;
transmitting, to a base station, the first CSI report for a set of the resource blocks or resource block groups of the first subband;
obtaining configuration information related to a first transmission occasion and a second transmission occasion; and
identifying according to the configuration information, a second frequency domain resource used to configure the second transmission occasion, wherein the second frequency domain resource is different from a first frequency domain resource used to configure the first transmission occasion and wherein the second frequency domain resource is configured based on the first CSI report.

7. The method according to claim 6, further comprising:
transmitting, to the base station, a second CSI report for resource blocks or resource block groups of a second subband surrounding the first subband.

8. The method according to claim 7, further comprising:
receiving a request from the base station for the second CSI;
wherein the request comprises an indication of the second subband.

9. The method according to any of claims 6 to 8, wherein the configuration information comprises a shift value indicating a shift of a starting resource block or resource block group of the second frequency domain resource with respect to a starting resource block or resource block group of the first frequency domain resource, and wherein the shift value is configured based on at least one of the first CSI report and the second CSI report.

10. The method according to any of claims 6 to 8, wherein the configuration information comprises an indication indicating a number of resource blocks or resource block groups to be increased or decreased for the second frequency domain resource allocated to the second transmission occasion with respect to the first frequency domain resource allocated to the first transmission occasion, and wherein the number is determined based on at least one of the first CSI report and the second CSI report.

11. An apparatus at a base station for wireless communication, the apparatus comprising:
at least one processor; and
at least one memory storing instructions that, when executed by the at least one processor, cause the apparatus at least to:
transmit an information element configuring a first channel status information, CSI, report of a user equipment, wherein the information element indicates a size and a starting point of resource blocks or resource block groups configured to a first subband;
receive, from the user equipment, the first CSI report of a set of the resource blocks or the resource block groups of the first subband;
determine, based on the first CSI report, a second frequency domain resource to be used to configure a second transmission occasion, wherein the second frequency domain resource is different from a first frequency domain resource used to configure a first transmission occasion; and
transmit configuration information related to the first transmission occasion and the second transmission occasion.

12. The apparatus according to claim 11, wherein when the instructions are executed by the at least one processor, further cause the apparatus at least to:
receive from the user equipment, a second CSI report for resource blocks or resource block groups of a second subband surrounding the first subband,
wherein the second frequency domain resource is determined further based on the second CSI report.

13. The apparatus according to claim 12, wherein when the instructions are executed by the at least one processor, further cause the apparatus at least to:
transmit a request to the user equipment for the second CSI report;
wherein the request comprises an indication of the second subband.

14. The apparatus according to any of claims 11 to 13, wherein the configuration information comprises a shift value indicating a shift of a starting resource block or resource block group of the second frequency domain resource with respect to a starting resource block or resource block group of the first frequency domain resource.

15. The apparatus according to claim 14, wherein the configuration information comprises a frequency domain resource allocation bitmap configured to allocate for the first transmission occasion, and the shift value indicates shifting an index of the starting resource block or resource block group of the frequency domain resource allocation bitmap.
